# EUROPÄISCHE PATENTSCHRIFT

(11) **EP 1 902 622 B1**
(45) Veröffentlichungstag und Bekanntmachung des Hinweises auf die Patenterteilung: **07.01.2009**
(21) Anmeldenummer: 06019555.9
(22) Anmeldetag: 19.09.2006
(51) Int. Cl.: A22C 11/10

(54) **Vorrichtung und Verfahren zum Abteilen eines gefüllten Wurststrangs**
Device and method for dividing a filled sausage strand
Procédé et dispositif pour diviser un chapelet de saucisses

(43) Veröffentlichungstag der Anmeldung: 26.03.2008
(73) Patentinhaber: Albert Handtmann Maschinenfabrik GmbH & Co. KG, 88400 Biberach (DE)
(72) Erfinder: Bächtle, Manfred, 88433 Schemmerhofen (DE)
(74) Vertreter: Grünecker, Kinkeldey, Stockmair & Schwanhäusser Anwaltssozietät

(56) Entgegenhaltungen:
- EP-A- 0 472 825
- EP-A1- 0 931 458
- DE-U1- 9 012 339
- US-A- 3 115 668
- US-A- 6 050 888

## Beschreibung

Die vorliegende Erfindung betrifft eine Vorrichtung und ein Verfahren zum Abteilen eines gefüllten Wurststrangs gemäß dem Oberbegriff des Anspruchs 1 sowie gemäß dem Anspruch 9.

Eine solche Vorrichtung ist bereits aus der US 6050888 bekannt, die nachfolgenden unter Bezugnahme der Fig. 11 näher erläutert wird.

Bei der Wurstherstellung wird zwischen portionierenden und konstante Wurststränge füllenden Systemen unterschieden. Bei den portionierenden Systemen wird ein zuvor definiertes Volumen aus dem Füllrohr einer Füllmaschine in eine Wursthülle ausgestoßen. Anschließend wird die Portion z.B. durch Drehen der Hülle verschlossen, wonach die nächste Portion ausgestoßen wird. Mit solchen Systemen sind nur geringe Portionsleistungen möglich.

Bei konstante Wurststränge füllenden Systemen wird der Füllgutausstoß beim Abteilvorgang nicht gestoppt. Das Abteilen des Stranges in einzelne Portionen erfolgt durch Einschnüren mit Abteilelementen. Wird der Strang dabei zusätzlich auf Torsion vorgespannt, so kann an diesen Stellen gleichzeitig durch Verdrehen eine sogenannte Abdrehstelle erzeugt werden. Mit diesen Systemen werden höhere Leistungen erzielt.

Zum Abteilen der gefüllten Wurststränge gibt es grundsätzlich zwei Möglichkeiten.

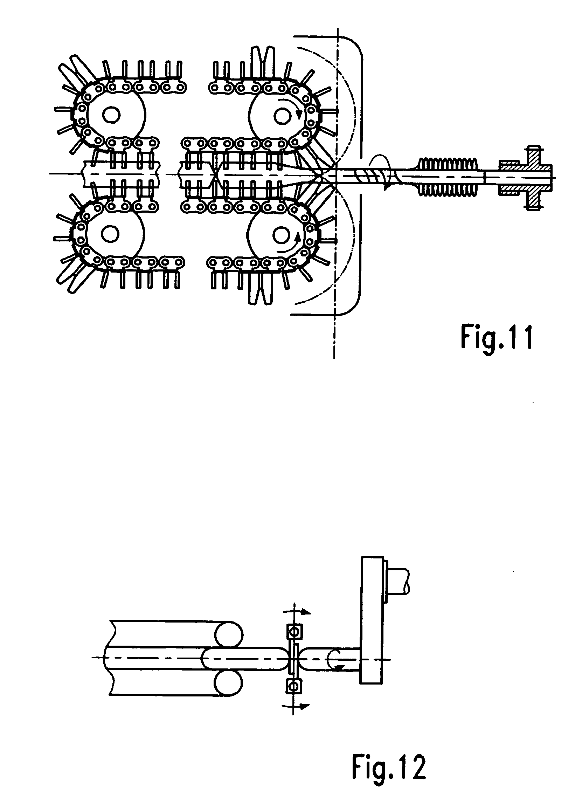

Einerseits kann der kontinuierlich gefüllte Wurststrang mit Hilfe eines umlaufenden Transportelementes, z.B. einer Kette oder eines Zahnriemens abgeteilt werden. Hierfür sind auf dem Transportelement am Umfang in gleichen Abständen Abteilelemente angebracht, wie aus Fig. 11 hervorgeht. Die Abteilelemente greifen paarweise in den gefüllten Wurststrang ein und schnüren diesen ab, so dass eine Portion erzeugt wird. Die Abstände der Abteilelementpaare zueinander und somit die Änderungen der Wurstlänge kann ohne Modifikation der Anlage während der Produktion nicht variiert werden.

Um andere Längen herzustellen wird deshalb in der Regel ein neues Kettenpaar verwendet. Somit ist keine Flexibilität bezüglich der Länge eines Produktes möglich. Darüber hinaus besitzen die Transportelemente, d.h. die Kette oder die Zahnriemen, auf welchen die Abteilelemente befestigt sind, normalerweise eine feste Teilung. Somit ist es durch Tausch des Kettenpaars nicht möglich, Wurstlängen herzustellen, welche nicht in diese Teilung passen. Nur solche Wurstlängen sind herstellbar, die der ganzzahligen Teilung der Abteilelemente entsprechen. In der EP 1430779 wurde bereits versucht, diese mangelnde Flexibilität zu verbessern. Dort wurde bereits beschrieben, die Abteilelemente abnehmbar an den umlaufenden Transportelementen zu befestigen, und an anderen Positionen mit einer anderen Teilung am Umfang des Transportelementes zu montieren. Da aber das Transportelement, d.h. der Riemen oder die Kette selbst eine bestimmte Länge hat, ist es auch mit einer solchen Ausführungsform nur möglich, Wurstlängen herzustellen, deren ganzzahliges Vielfaches der Transportelementlänge entspricht. Beispiel: Ein Transportelement, das einen Umfang von 500 mm aufweist, kann beispielsweise fünf Abteilelemente aufweisen, die konstanten Abstand zueinander haben. Somit können Würste mit einer Wurstlänge von ca. 100 mm hergestellt werden. Bei vier Abteilelementen beträgt die Länge der einzelnen Portionen 500 mm/4 = 125 mm. Das bedeutet, dass die gewünschte Länge nur abhängig von dem Umfang des Transportelements gewählt werden kann. Eine Wurstlänge von 110 mm ist beispielsweise bei dem oben beschriebenen Transportelement nicht möglich. Außerdem muss der Bediener, will er nicht einen kompletten Satz der Transportelemente bei einer Längenanpassung auswechseln, jedes Mal eine mechanische Umbestückung vornehmen, was viel Zeit beansprucht, während der er mit der Anlage nicht produzieren kann.

Eine weitere Möglichkeit zum Abteilen des gefüllten Wurststrangs wird beispielsweise in der EP 0472825 beschrieben und ist in Fig. 12 gezeigt. Hierbei ist in Transportrichtung hinter einem flexiblen Verdrängerpaar ein Transportband angeordnet. Die Drehzahl des Verdrängerpaars ist während des Umlaufs variabel, somit können unterschiedliche Wurstlängen hergestellt werden.

Nachteilig bei der in Fig. 12 gezeigten Ausführungsform ist, dass die beiden benötigten Systeme, d.h. Verdränger und Transportband zum Herstellen von Produkten gleicher Länge hintereinander angeordnet sind. Es kommt insbesondere bei der Verarbeitung von Naturdarm zu Problemen beim Übergang der ersten Portion vom Verdränger in das Transportband, da der Wurststrang aufgrund der natürlichen Krümmung des Darms das Bestreben hat, von der theoretischen Füllachse abzuweichen. Außerdem besteht zwischen den Transportbändem und den einzelnen Wurstportionen kein Formschluss in Transportrichtung, so dass der auftretende Schlupf zu Längenschwankungen der einzelnen Portionen führen kann.
Hiervon ausgehend liegt der vorliegenden Erfindung die Aufgabe zugrunde, eine Vorrichtung und ein Verfahren bereitzustellen, die einerseits die Nachteile der oben genannten Systeme eliminieren und ermöglichen, einen gefüllten Wurststrang abzuteilen, wobei die Längeneinstellung ohne mechanische Anpassung flexibel gestaltet werden kann, ohne dass zwei hintereinander angeordnete Systeme verwendet werden müssen.

Diese Aufgabe wird durch die Merkmale der Ansprüche 1 und 9 gelöst.

Gemäß der vorliegenden Erfindung umfasst die Vorrichtung mehrere nebeneinander angeordnete, unabhängig voneinander antreibbare Transportelementpaare mit entsprechenden Abteilelementpaaren. Dadurch, dass die Geschwindigkeit der Transportelementpaare unabhängig voneinander eingestellt werden kann, kann durch Änderung der Geschwindigkeit der Abstand zwischen aufeinander folgenden Abteilstellen genau eingestellt werden, so dass eine bestimmte Länge I des abgeteilten Wurststrangs eingestellt werden kann. Somit ist es möglich, ohne Modifikation mechanischer Teile und ohne komplettes Umrüsten unterschiedliche Produktlängen herzustellen. Dabei kann die Länge des abgeteilten Wurststrangs flexibel gestaltet werden und beliebig eingestellt werden. Es gibt darüber hinaus keine kritische Übergangsstelle zwischen zwei hintereinander angeordneten Systemen. Darüber hinaus ist die Länge des abgeteilten Wurststrangs nicht abhängig von der Länge bzw. dem Umfang des umlaufenden Transportelements.

Gemäß einer bevorzugten Ausführungsform der vorliegenden Erfindung umfasst die Vorrichtung zusätzlich ein unabhängig antreibbares Transportelementpaar, das keine Abteilelemente aufweist, und derart ausgebildet ist, dass es den gefüllten Wurststrang führt und stützt, sowie eine Steuereinrichtung, die dieses Transportelementpaar mit einer Geschwindigkeit antreibt, so dass es synchron zum Füllgutausstoß bzw. zur Fördergeschwindigkeit des gefüllten Wurststrangs läuft. Dieses zusätzliche Transportelementpaar, das vorzugsweise in einem mittleren Bereich der Transportelemente angeordnet ist, kann dabei eine zusätzliche Abstütz- und Führungsfunktion für die Produkte übernehmen. Dieses Transportelementpaar kann dann auch größere Wege zurücklegen als die anderen mit Abteilelementen ausgerüsteten Transportelemente. Dieses System eignet sich besonders zur Herstellung abgedrehter Portionen (z.B. in Kombination mit Abdreh- und Bremsringgetriebe), da durch die Abstütz- und Führungsfunktion des Transportelementpaars der gefüllte Wurststrang sicher gehalten werden kann und somit auf Torsion vorgespannt werden kann. Durch den Eingriff der Abteilelemente der anderen Transportelementpaare wird dann die Position der Abteilstelle definiert.

Gemäß einem weiteren Ausführungsbeispiel ist zumindest ein Transportelementpaar aus mehreren beabstandeten Untertransportelementpaaren gebildet, die jedoch gleich angetrieben werden. Die unterschiedlichen Transportelementpaare können dann ineinander verschachtelt bzw. ineinander liegend angeordnet werden. Wenn die Untertransportelemente der Transportelementpaare, die beabstandet nebeneinander liegen und den gleichen Antrieb aufweisen, über ein entsprechendes Verbindungselement miteinander verbunden sind, kann ein entsprechendes Abteilelement an dem Verbindungselement angeordnet werden. Somit kann auf einfache Art und Weise das Abteilelement exakt zwischen den Untertransportelementen positioniert werden. Vorzugsweise sind die Abteilelemente so angeordnet , dass sie im Wesentlichen über der Mittelachse M der nebeneinander liegenden Transportelemente liegen. Somit ist sichergestellt, dass die umlaufenden Abteilelemente bzw. Abteilelementpaare den gefüllten Wurststrang exakt um die Längsachse L des Wurststrangs abteilen können und nicht seitlich versetzt sind.

Vorzugsweise sind die Abteilelemente derart auf den Transportelementen angeordnet, dass sie um eine Achse, im Wesentlichen senkrecht zur Transportrichtung T drehbar gelagert sind. Damit besteht die Möglichkeit, die Abteilelemente rechtwinklig zum Füllgutstrang in Eingriff zu bringen, und damit beispielsweise geformte Enden zu erzeugen. Die Abteilelemente werden mittels einer nicht näher erläuterten Führung rechtwinklig zum Füllstrang geführt bzw. in diese Position gebracht.

Gemäß der vorliegenden Erfindung ist eine Steuereinrichtung vorgesehen, die die unabhängigen Antriebe der Transportelementpaare derart steuert, dass die durch aufeinander folgende, in den Wurststrang eingreifende, Abteilelementpaare abgeteilten Wurststrangabschnitte eine vorbestimmte Länge I aufweisen.

Die umlaufenden Transportelemente der Transportelementpaare können entweder parallel zueinander gegenüber liegen oder aber auch in Transportrichtung T unter einem bestimmten Winkel α aufeinander zulaufen. Somit können die Abteilelemente der Abteilelementpaare langsam in Eingriff gebracht werden, wodurch ein sanftes Erzeugen der Abteilstelle möglich ist.

In vorteilhafter Weise wird beim Eingreifen des Abteilelementpaares in den Wurststrang das entsprechende Transportelementpaar mit einer Geschwindigkeit angetrieben, so dass es synchron zum Füllgutausstoß bzw. zur Fördergeschwindigkeit des gefüllten Wurststrangs läuft. Somit ist eine kontinuierliche Produktion bzw. ein kontinuierlicher Transport des gefüllten Wurststrangs möglich.

Gemäß einer bevorzugten Ausführungsform des erfindungsgemäßen Verfahrens werden zur Erzeugung der Abteilstellen jeweils zwei hintereinander angeordnete Abteilelementpaare unmittelbar hintereinander in Eingriff in den abzuteilenden gefüllten Wurststrang gebracht. Dadurch wird eine breitere Abteilstelle erzeugt. Dieser Effekt verstärkt sich, wenn sich die zwei Paare während ihres Eingriffes mit unterschiedlichen Geschwindigkeiten bewegen, wenn also das zweite Abteilelementpaar langsamer läuft als das erste Paar. Somit wird die Abteilstelle auseinander gezogen, so dass sich eine noch größere Lücke zwischen den Portionen ergibt. Dies ist insbesondere von Vorteil, wenn die Abteilstelle durch z.B. zwei nebeneinander angeordnete Clips verschlossen wird.

Die vorliegende Erfindung wird nachfolgend unter Bezugnahme der folgenden Zeichnungen näher erläutert:
- Fig. 1: zeigt eine schematische Seitenansicht einer mit der erfindungsgemäßen Vorrichtung versehenen Füllmaschine;
- Fig. 2: zeigt in perspektivischer Darstellung eine Ausführungsform der erfindungsgemäßen Vorrichtung zum Abteilen eines gefüllten Wurststrangs;
- Fig. 3: zeigt schematisch eine Seitenansicht der in Fig. 2 gezeigten Ausführungsform;
- Fig. 4a und 4b: zeigen einen Ausschnitt der erfindungsgemäßen Vorrichtung beim Abteilvorgang;
- Fig. 5: zeigt einen Ausschnitt der nebeneinander angeordneten Transportelemente in perspektivischer Darstellung;
- Fig. 6: zeigt eine Aufsicht auf die auseinander geschnittenen nebeneinander angeordneten Transportelemente gemäß einer bevorzugten Ausführungsform;
- Fig. 7: zeigt eine Aufsicht auf die nebeneinander angeordneten Transportelemente gemäß einer weiteren Ausführungsform;

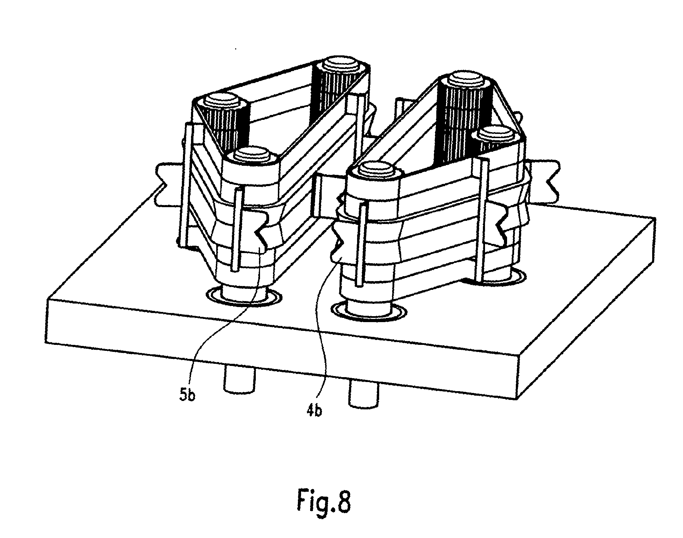

- Fig. 8: zeigt in perspektivischer Darstellung eine weitere Ausführungsform der vorliegenden Erfindung;
- Fig. 9: zeigt eine Seitenansicht einer weiteren bevorzugten Ausführungsform der vorliegenden Erfindung;
- Fig. 10: zeigt grob in schematischer Darstellung das Erzeugen einer Abteilstelle mit zwei hintereinander angeordneten Abteilelementpaaren;
- Fig. 11: zeigt eine Vorrichtung zum Abteilen eines gefüllten Wurststrangs gemäß dem Stand der Technik;
- Fig. 12: zeigt eine Vorrichtung zum Abteilen eines gefüllten Wurststrangs gemäß dem Stand der Technik.

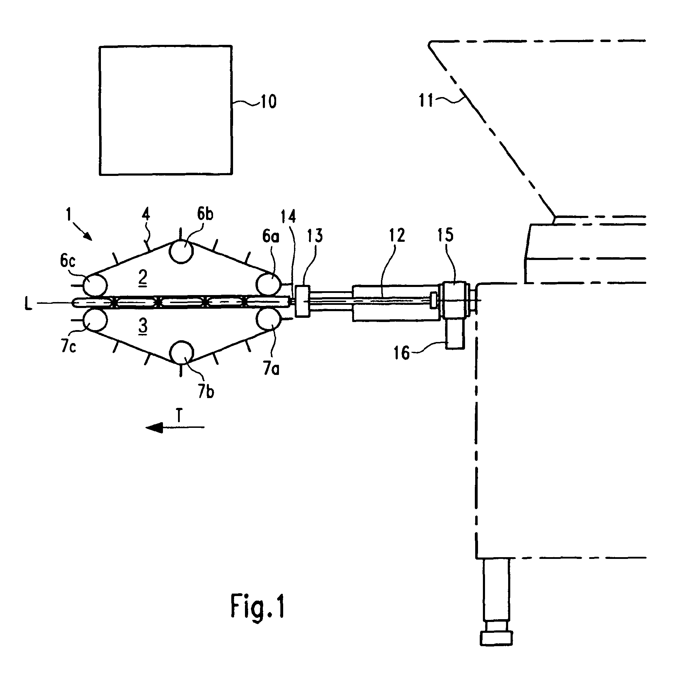

Fig. 1 zeigt in schematischer Darstellung eine Füllmaschine zum Erzeugen eines gefüllten Wurststrangs 14, der mit Hilfe der erfindungsgemäßen Vorrichtung 1 in einzelne Wurststrangabschnitte mit einer vorbestimmten Länge I unterteilt wird. Die Füllmaschine weist in bekannter Weise einen Einfülltrichter 11 auf, über den pastöse Masse, beispielsweise Wurstbrät, eingefüllt wird und dann über ein nicht dargestelltes Förderwerk in ein Füllrohr 12 geschoben wird. Am Füllrohrende befindet sich die Darmbremse 13. Zum Abdrehen des gefüllten Wurststrangs ist hier optional ein Abdrehgetriebe 15 vorgesehen, das über den Motor 16 angetrieben wird. Über das Abdrehgetriebe kann das Füllrohr 12 zusammen mit der darauf aufgezogenen Hülle um die Längsachse L gedreht werden.

Über das Füllrohr 12 wird die pastöse Masse in die auf dem Füllrohr 12 aufgezogenen und durch die Darmbremse 13 gehaltene Hülle, z.B. den Darm, ausgestoßen, wodurch der gefüllte Wurststrang 14 in bekannter Art und Weise erzeugt wird.

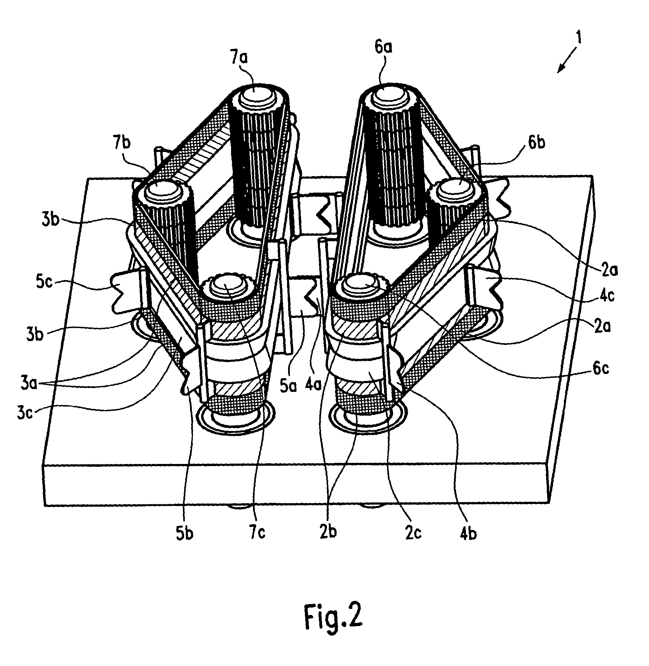

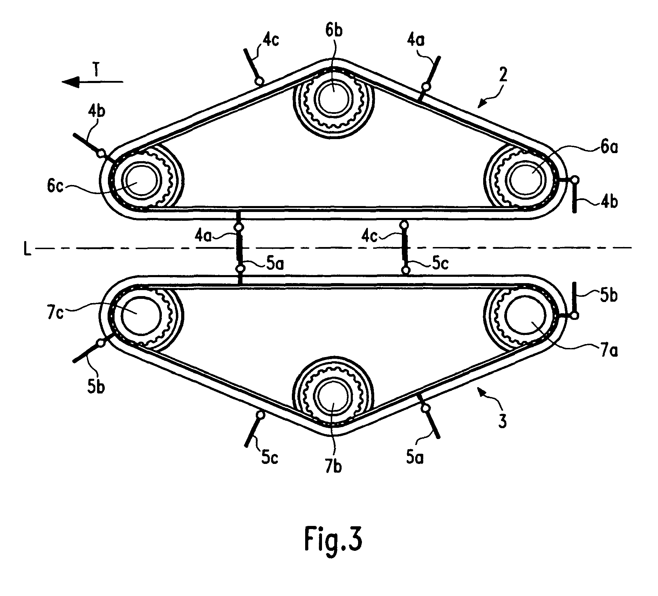

Unmittelbar hinter dem Füllrohr befindet sich die Vorrichtung 1 zum Abteilen des gefüllten Wurststrangs. Der Wurststrang soll durch die Vorrichtung 1 in Einzelportionen vorbestimmter Länge I unterteilt werden. Fig. 2 und 3 zeigen die erfindungsgemäße Vorrichtung gemäß einer bevorzugten Ausführungsform. Wie aus Fig. 3 hervorgeht, umfasst die Vorrichtung gegenüberliegende Transportelemente 2, 3, die paarweise angeordnet sind, beispielsweise stellen die gegenüberliegenden Transportelemente 2a, 3a sowie 2b, 3b und 2c, 3c drei entsprechende Transportelementpaare dar. Die nebeneinander angeordneten Transportelemente 2a, b, c sind im Wesentlichen symmetrisch zu den Transportelementen 3a, b, c angeordnet, wobei die Längsachse L eine Symmetrieachse darstellt. Die Transportelemente 2, 3 sind umlaufend, hier als umlaufende Riemen, Ketten etc. ausgebildet. Die jeweiligen Transportelementpaare 2a, 3a; 2b, 3b; 2c, 3c sind unabhängig voneinander über entsprechende Antriebe 6a, b, c, 7a, b, c antreibbar. Das bedeutet, dass die gegenüberliegenden Transportelemente eines Transportelementpaares 2a, 3a; 2b, 3b; 2c, 3c synchron angetrieben werden, die unterschiedlichen Transportelementpaare können jedoch mit unterschiedlichen Geschwindigkeiten angetrieben werden.

Dabei treibt der Antrieb 6a beispielsweise das Transportelement 2a an, der Antrieb 6b das Transportelement 2b und der Antrieb 6c das mittlere Transportelement 2c. Gleichzeitig treibt der Antrieb 7a das Transportelement 3a, der Antrieb 7b das Transportelement 3b und der Antrieb 7c das mittlere Transportelement 3c an. Die Antriebe 7a, 6a sowie die Antriebe 6b, 7b und die Antriebe 7c, 6c laufen jeweils paarweise synchron. Die unterschiedlichen Antriebe sind dabei so ausgebildet, dass sich nur der Bereich einer von einer Antriebswelle angetriebenen Hülse bewegt, die in Kontakt mit den entsprechenden Transportelementen 2a, b, c, 3a, b, c steht. Die Antriebsachsen der Antriebe 6a, b, c, 7a, b, c liegen im Wesentlichen senkrecht zur Transportrichtung T bzw. zur Längsachse L der Vorrichtung. Das bedeutet, dass die nebeneinander angeordneten Transportelemente nebeneinander in Bezug auf die Antriebsachse der Antriebe 6a, b, c, 7a, b, c, d.h. im Wesentlichen senkrecht zur Transportrichtung T angeordnet sind.

Die Transportelemente der Transportelementpaare 2a, 3a; 2b, 3b; 2c, 3c weisen entsprechende Abteilelemente 4a, b, c, 5a, b, c auf. Bei dem in den Fig. 2 und 3 gezeigten Ausführungsbeispiel sind jeweils drei Transportelementpaare mit jeweils zwei Abteilelementpaaren 4a, 5a; 4b, 5b; 4c, 5c vorgesehen. Es könnten auch mehrere Abteilelementpaare pro Transportelementpaar vorgesehen sein.

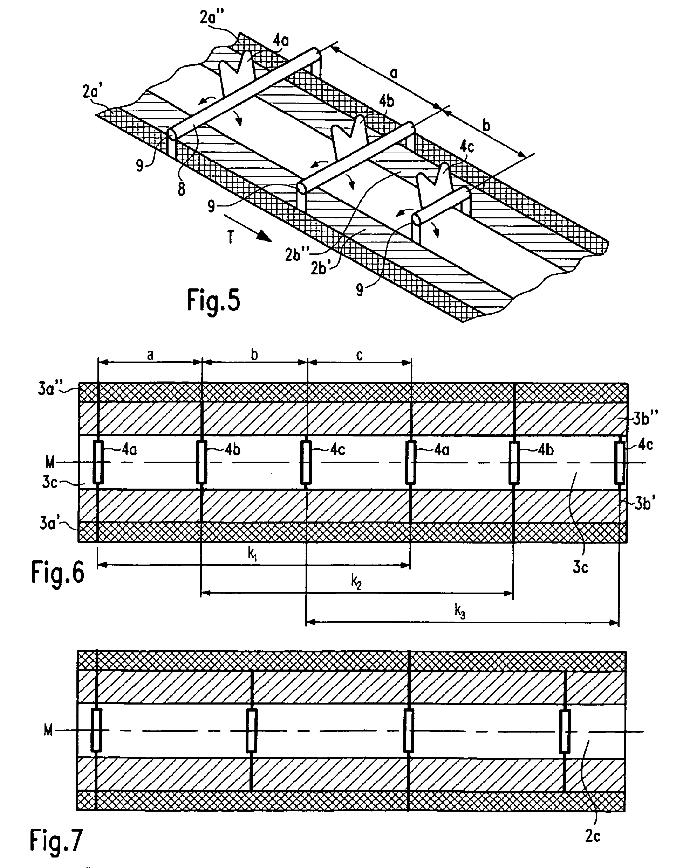

Wie noch besser in Zusammenhang mit den Fig. 5 bis 7 erkannt werden kann, ist bei dieser Ausführungsform ein Transportelementpaar aus mehreren beabstandeten Untertransportelementpaaren 2a', a", 3a', a", 2b', b", 3b', b" gebildet. Wie aus Fig. 5 ersichtlich ist, bilden die äußeren schraffiert dargestellten Untertransportelemente 2a', 2a" das Transportelement 2a, das über den Antrieb 6a angetrieben wird, wobei die Untertransportelementelemente 2a', 2a" mit gleicher Geschwindigkeit angetrieben werden. Innerhalb der Untertransportelemente 2a', 2a" sind die Untertransportelemente 2b', 2b", wie gestrichelt dargestellt, angeordnet. In der Mitte liegt das Transportelement 2c, das nicht unterteilt ist. Die Untertransportelemente 2a', 2a" sowie 2b', 2b" sind jeweils über ein Verbindungselement 8, durch einen Bogen miteinander verbunden, wobei das Abteilelement 4a bzw. 4b auf dem entsprechenden Bogen 8 angeordnet ist. Das Abteilelement 4c ist direkt auf dem Transportelement 2c angeordnet. Die Abteilelemente 4a, b, c sind so angeordnet, dass sie im Wesentlichen über der Mittelachse M der nebeneinander liegenden Transportelemente zu liegen kommen, um sicherzustellen, dass der gefüllte Wurststrang 14 korrekt abgeteilt wird. Wie aus Fig. 5 zu erkennen ist, sind die Abteilelemente 4a, b, c vorzugsweise um eine Achse, die parallel zur Antriebsachse der Transportelemente liegt, drehbar gelagert angeordnet. Dazu ist jeweils das Lager 9 vorgesehen. Damit besteht die Möglichkeit, die Abteilelemente 4a, b, c rechtwinklig zum Füllgutstrang in Eingriff zu bringen, und damit beispielsweise geformte Enden (ohne Abdrehen) zu erzeugen. Die Abteilelemente werden mittels einer nicht näher erläuterten und nicht dargestellten Führung rechtwinklig zum Füllstrang geführt bzw. in diese Position gebracht.

Die Abteilelemente 4a, b, c können unterschiedliche Formen aufweisen, wie beispielsweise gerade Platten, V-förmig, etc.

In Zusammenhang mit Fig. 5 wurde nur eine Hälfte des Transportelementpaars beschrieben, es sollte jedoch offensichtlich sein, dass die gegenüberliegenden Transportelemente der Transportelementpaare entsprechend aufgebaut sind.

Fig. 6 zeigt eine Aufsicht auf die auseinander geschnittenen nebeneinander angeordneten Transportelemente 3a, b, c, die wie in Zusammenhang mit Fig. 5 erläutert, aufgebaut sind. Wie aus Fig. 6 deutlich wird, weist jedes Transportelement 3a, b, c jeweils zwei Abteilelemente 4a, 4b, 4c auf. Die Abteilelemente 4 der gleichen Transportelemente haben einen vorbestimmten Abstand K1, K2 oder K3 voneinander, so dass das geschlossene Transportelement, d.h. der geschlossene Riemen, eine bestimmte Teilung aufweist. In dem in Fig. 6 gezeigten Zustand weist das Abteilelement 4a einen Abstand a von dem Abteilelement 4b auf. Das Abteilelement 4b weist einen Abstand b von Abteilelement 4c auf und das Abteilelement 4c weist einen Abstand c von den Abteilelement 4a usw. auf. Diese Abstände sind variabel. Sie können durch Veränderung der Geschwindigkeit mit denen die Abteilelemente über die entsprechenden Transportelemente angetrieben werden, variiert werden. Wie aus Fig. 5 hervorgeht, ist dort beispielsweise der Abstand b kleiner als der Abstand a.

Über die in Fig. 1 gezeigte Steuereinrichtung 10 kann über die entsprechenden Antriebe 6, 7 die Geschwindigkeit der einzelnen Transportelementpaare derart gesteuert werden, dass die durch aufeinander folgende in den Wurststrang 14 eingreifende Abteilelementpaare 4a, 5a, 4b, 5b, 4c, 5c abgeteilten Wurststrangabschnitte bzw. Portionen eine vorbestimmte Länge L aufweisen. Die Abteilelemente können sich nicht überholen.

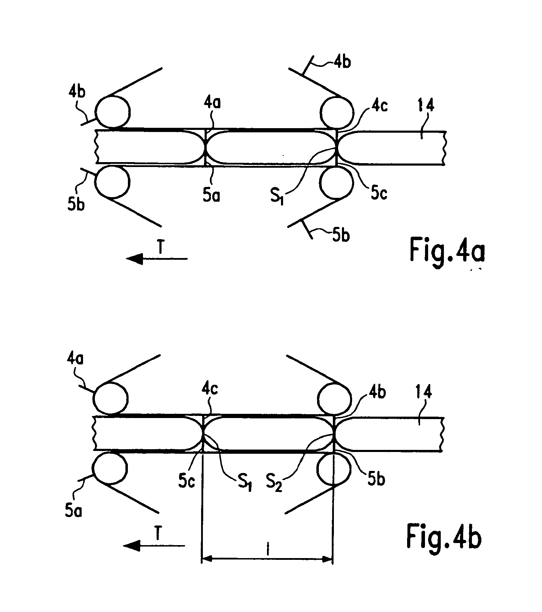

Die erfindungsgemäße Vorrichtung arbeitet wie folgt. Wie zuvor beschrieben wird, wird durch die in Fig. 1 gezeigte Füllmaschine ein gefüllter Wurststrang 14 erzeugt und durch die nebeneinander liegenden Transportelementpaare 2a, 3a; 2b, 3b; 2c, 3c hindurchgeführt. Die Transportelemente eines jeweiligen Transportelementpaars werden synchron angetrieben und sind derart ausgerichtet, dass die entsprechenden Abteilelemente der Abteilelementpaare 4a, 5a; 4b, 5b; 4c, 5c paarweise zueinander ausgerichtet sind und im Wesentlichen gegenüber angeordnet sind, damit sie, wenn sie in den Wurststrang eingreifen, eine Abteilstelle S erzeugen können. Der gefüllte Wurststrang 14 wird dann, wie beispielsweise aus Fig. 4a hervorgeht, an einer ersten Stelle S1 durch das Abteilelementpaar 4c, 5c abgeteilt, das in den Wurststrang eingreift. Beim Eingreifen der Abteilelemente wird an dieser Stelle die pastöse Masse im Wurststrang verdrängt, so dass es zu einer Abteilstelle kommt. Dabei können die Abteilelemente 4, 5 ineinander greifen oder nebeneinander vorbei gleiten, wie allgemein bekannt ist. Die Abteilelemente 4c, 5c sind auf dem Transportelementpaar 2c, 3c angeordnet. Beim Eingreifen in den Wurststrang wird das Abteilelementpaar 4c, 5c über die Steuerung 10 synchron zum Füllgutausstoß, d.h. zur Ausstoßgeschwindigkeit der pastösen Masse aus dem Füllrohr bzw. zur Fördergeschwindigkeit des gefüllten Wurststrangs 14 angetrieben. Der gefüllte Wurststrang 14 wird durch die Bewegung der eingreifenden Abteilelemente 4c, 5c weiter in Transportrichtung T gefördert.

Wie aus Fig. 4a erkannt werden kann, folgt dem Abteilelementpaar 4c, 5c, das mit dem Wurststrang 14 in Eingriff steht, das Abteilelementpaar 4b, 5b, das auf dem Transportelementpaar 2b, 3b angeordnet ist. Dieses nachfolgende Paar von Abteilelementen bewegt sich mit einer entsprechenden von der Steuereinrichtung 10 geregelten Geschwindigkeit in Richtung der nächsten herzustellenden Abteilstelle S2 und kann eventuell nach kurzer Wartezeit im gewünschten Moment in Eingriff gebracht werden, so dass die zweite Abteilstelle S2 hergestellt wird, und somit eine Portion mit der Länge I gefertigt wird. In dem in Fig. 4a und 4b gezeigten Beispiel kann sich das Transportelementpaar 2b, 3b mit einer von der Transportgeschwindigkeit des gefüllten Wurststrangs unterschiedlichen Geschwindigkeit bewegen, da keines der auf diesem Transportelementpaar angeordneten Abteilelementpaare mit dem Wurststrang 14 in Eingriff steht. Durch die Steuereinrichtung 10 kann somit die Geschwindigkeit der Transportelementpaare 2a, 3a; 2b, 3b; 2c, 3c derart eingestellt werden, dass der Abstand zwischen der ersten S1 und der zweiten Stelle S2 einer vorbestimmten Länge L des abgeteilten Wurststrangs entspricht. Die Steuerung 10 berechnet über die Länge bzw. den Umfang der umlaufenden Transportelemente sowie der entsprechenden Teilung welche Geschwindigkeit ein entsprechendes Transportelement zur Erzeugung einer bestimmten Abteilstelle aufweisen muss.

Der in Zusammenhang mit Fig. 4a und b gezeigte Vorgang wiederholt sich kontinuierlich.

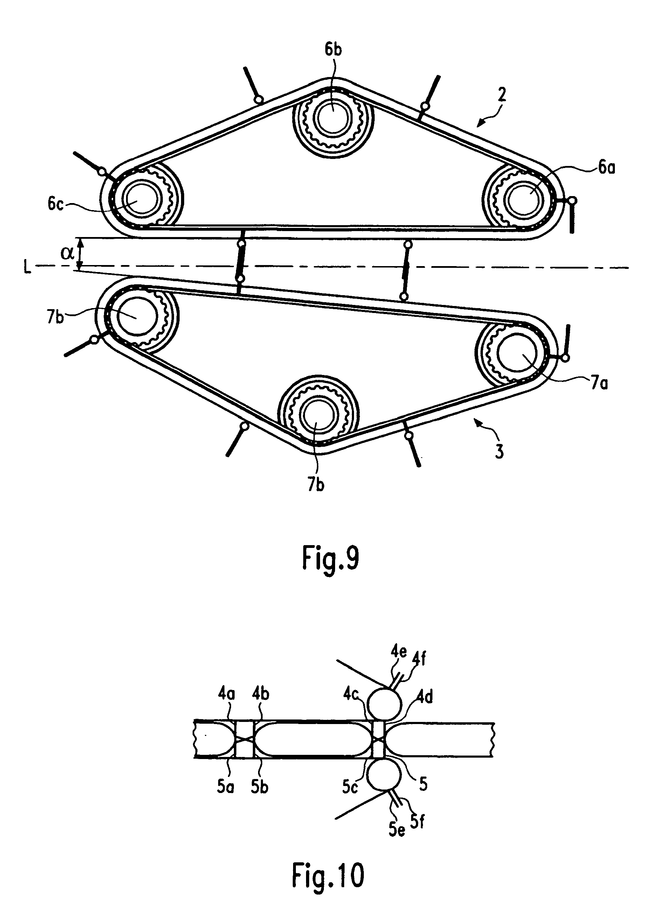

Wie aus Fig. 10 hervorgeht, kann gemäß einer bevorzugten Ausführungsform die Abteilstelle S1, S2 derart hergestellt werden, dass zwei Paar Abteilelemente 4, 5 unmittelbar hintereinander in den abzuteilenden Strang 14 in Eingriff gebracht werden. Dadurch wird eine breitere Abteilstelle erzeugt. Dieser Effekt verstärkt sich, wenn sich die zwei Paare 4, 5 während ihres Eingriffs mit unterschiedlichen Geschwindigkeiten bewegen, wenn also das zweite Paar langsamer läuft als das erste Paar. Dazu müssen die zwei hintereinander laufenden Abteilelementpaare z.B. 4a, 5a, 4b, 5b auf unterschiedlichen Transportelementpaaren angeordnet sein. So ist der Abstand zwischen den Abteilelementpaaren veränderlich. Zwei aufeinanderfolgende Verdrängerpaare, hier 4c, 5c; 4d, 5d bzw. 4e, 5e, 4f, 5f sollten wiederum auf verschiedenen Transportelementen angeordnet sein, damit unterschiedliche Bewegungsabläufe möglich sind. Somit besteht die Möglichkeit zum Herstellen einer noch größeren Lücke zwischen den Portionen. Dies ist bei einem Verschließvorgang, wie er z.B. mit zwei nebeneinander platzierten Clips erzeugt wird, vorteilhaft.

Fig. 7 zeigt eine bevorzugte Ausführungsform der vorliegenden Erfindung. Bei dieser Ausführungsform ist ein unabhängig antreibbares Transportelement 2c vorgesehen, das keine Abteilelemente aufweist, und derart ausgebildet ist, dass es den gefüllten Wurststrang 14 führt und stützt. Dieses Transportelementpaar 2c, 3c wird über die Steuereinrichtung 10 derart angetrieben, dass es synchron zum Füllgutausstoß bzw. zur Fördergeschwindigkeit des gefüllten Wurststrangs 14 läuft. Die Oberfläche dieses Transportelementpaars bzw. deren Abstand ist so ausgebildet, dass sie den Wurststrang 14 abstützt und führt. Dieses mittlere Transportelementpaar kann dann auch größere Wege zurücklegen als die anderen mit Abteilelementen 4, 5 ausgerüsteten Transportelemente. Dieses System eignet sich insbesondere zur Herstellung abgedrehter Portionen, d.h. wenn, wie in Fig. 1 dargestellt ist, ein Abdrehgetriebe 15 sowie ein Bremsring 13 vorgesehen sind. Dabei wird der Wurststrang 14 mit konstanter Geschwindigkeit ausgestoßen und von den Transportelementpaar 2c, 3c gehalten und auf Torsion vorgespannt. Durch den Eingriff der Abteilelemente wird dann die Abdrehstelle definiert.

Wie aus Fig. 9 hervorgeht, ist es auch gemäß einer weiteren Ausführungsform der vorliegenden Erfindung möglich, dass die umlaufenden Transportelemente der Transportelementpaare nicht parallel gegenüber liegen, sondern in Transportrichtung T unter einem bestimmten Winkel α aufeinander zulaufen. Dies ermöglicht, dass die Abteilelemente der Abteilelementpaare langsam in Eingriff kommen, wodurch die Abteilstelle sanft erzeugt wird.

## Patentansprüche

1. Vorrichtung (1) zum Abteilen eines gefüllten Wurststrangs (14) mit:
einem Transportelementpaar (2, 3), das umlaufende gegenüberliegende Transportelemente umfasst, zwischen denen der gefüllte Wurststrang (14) in Transportrichtung T gefördert wird, und die jeweils mindestens ein Abteilelement (4, 5) umfassen, **dadurch gekennzeichnet, dass**
die Vorrichtung mehrere nebeneinander angeordnete, unabhängig voneinander antreibbare Transportelementpaare (2a, 3a; 2b, 3b; 2c, 3c) mit entsprechenden Abteilelementpaaren (4a, 5a; 4b, 5b; 4c, 5c) umfasst.

2. Vorrichtung nach Anspruch 1, **dadurch gekennzeichnet, dass** die Vorrichtung (1) zusätzlich ein unabhängig antreibbares Transportelementpaar (2c, 3c) umfasst, das keine Abteilelemente aufweist, und derart ausgebildet ist, dass es den gefüllten Wurststrang führt und stützt, sowie eine Steuereinrichtung (10), die dieses Transportelementpaar (2c, 3c) mit einer Geschwindigkeit so antreibt, dass es synchron zum Füllgutausstoß bzw. zur Fördergeschwindigkeit des gefüllten Wurtstrangs läuft.

3. Vorrichtung nach mindestens einem der Ansprüche 1 oder 2, **dadurch gekennzeichnet, dass** zumindest ein Transportelementpaar (2a, 3a; 2b, 3b) aus mehreren beabstandeten Untertransportelementpaaren (2a', a", 3a', a"; 2b', b", 3b'; b") gebildet ist, die gleich angetrieben werden.

4. Vorrichtung nach Anspruch 3, **dadurch gekennzeichnet, dass** die Untertransportelemente (2a', a", 3a', a"; 2b', b", 3b'; b"), die beabstandet nebeneinander liegen, über ein Verbindungselement (8) der Transportelementpaare verbunden sind, an dem das Abteilelement (4a, 4b, 5a, 5b) angeordnet ist.

5. Vorrichtung nach mindestens einem der Ansprüche 1 bis 4, **dadurch gekennzeichnet, dass** die Abteilelemente (4a, 5a; 4b, 5b; 4c, 5c) so angeordnet sind, dass sie im Wesentlichen über der Mittelachse M der nebeneinander liegenden Transportelemente liegen.

6. Vorrichtung nach mindestens einem der Ansprüche 1 bis 5, **dadurch gekennzeichnet, dass** die Abteilelemente (4a, 5a; 4b, 5b; 4c, 5c) derart auf den Transportelementen angeordnet sind, dass sie um eine Achse senkrecht zur Transportrichtung T drehbar gelagert sind.

7. Vorrichtung nach mindestens einem der Ansprüche 1 bis 6, **dadurch gekennzeichnet, dass** eine Steuereinrichtung (10) vorgesehen ist, die die unabhängigen Antriebe der Transportelementpaare (2a, 3a; 2b, 3b; 2c, 3c) derart steuert, dass die durch aufeinander folgende in den Wurststrang eingreifende Abteilelementpaare (4a, 5a; 4b, 5b; 4c, 5c) abgeteilten Wurststrangabschnitte eine vorbestimmte Länge L aufweisen.

8. Vorrichtung nach mindestens einem der Ansprüche 1 bis 7, **dadurch gekennzeichnet, dass** die umlaufenden Transportelemente der Transportelementpaare (2a, 3a; 2b, 3b; 2c, 3c) einander weitgehend parallel gegenüber liegen oder in Transportrichtung T unter einem bestimmten Winkel (α) aufeinander zulaufen.

9. Verfahren zum Abteilen eines gefüllten Wurststrangs mit einer Vorrichtung nach mindestens einem der Ansprüche 1 bis 8 mit folgenden Schritten:
a) Transportieren des gefüllten Wurststrangs (14) in Transportrichtung T durch die nebeneinander angeordneten umlaufenden Transportelementpaare (2a, 3a; 2b, 3b; 2c, 3c) hindurch,
b) Abteilen des gefüllten Wurststrangs (14) an einer ersten Stelle S1 durch ein in den Wurststrang eingreifendes Abteilelementepaar (4a, 5a; 4b, 5b; 4c, 5c) eines der Transportelementpaare (2a, 3a; 2b, 3b; 2c, 3c),
c) Weitertransportieren des gefüllten Wurststrangs (14),
d) Abteilen des gefüllten Wurststrangs an einer zweiten Stelle S2, durch ein nachfolgendes in den Wurststrang eingreifendes Abteilelementepaar (4a, 5a; 4b, 5b; 4c, 5c) eines anderen Transportelementpaars (2a, 3a; 2b, 3b; 2c, 3c),
wobei die Geschwindigkeiten der Transportelementpaare (2a, 3a; 2b, 3b; 2c, 3c) derart eingestellt wird, dass der Abstand zwischen der ersten S1 und zweiten Stelle S2 einer vorbestimmten Länge I des abgeteilten Wurststrangs (14) entspricht.

10. Verfahren nach Anspruch 9, **dadurch gekennzeichnet, dass** beim Eingreifen des Abteilelementpaares in den Wurststrang das entsprechende Transportelementpaar mit einer Geschwindigkeit, synchron zum Füllgutausstoß bzw. zur Fördergeschwindigkeit des gefüllten Wurststrangs angetrieben wird.

11. Verfahren nach Anspruch 9 oder 10, **dadurch gekennzeichnet, dass** zur Erzeugung der Abteilstellen in den Schritten a) und d) jeweils zwei Abteilelementpaare (4a, 5a; 4b, 5b; 4c, 5c) unmittelbar hintereinander in Eingriff in den abzuteilenden gefüllten Wurststrang gebracht werden.

12. Verfahren nach Anspruch 11, **dadurch gekennzeichnet, dass** die zwei Abteilelementpaare (4a, 5a; 4b, 5b; 4c, 5c) auf unterschiedlichen Transportelementpaaren (2a, 3a; 2b, 3b; 2c, 3c) angeordnet sind, wobei das Transportelementpaar, das das zweite Abteilelementpaar aufweist, langsamer angetrieben wird als das erste.

## Claims

1. Apparatus (1) for dividing a stuffed sausage skein (14), comprising:
a transport element pair (2, 3) including rotating opposite transport elements between which the stuffed sausage skein (14) is conveyed in transport direction T and each of which include at least one dividing element (4, 5), **characterized in that**
the apparatus comprises several adjacently arranged transport element pairs (2a, 3a; 2b, 3b; 2c, 3c) drivable independently of each other with corresponding dividing element pairs (4a, 5a; 4b, 5b; 4c, 5c).

2. Apparatus according to claim 1, **characterized in that that** apparatus (1) additionally comprises an independently drivable transport element pair (2c, 3c) which has no dividing elements and is constructed to guide and support the stuffed sausage skein, and a control device (10) driving said transport element pair (2c, 3c) at a speed to run synchronously with respect to the stuffing material discharge and the transport speed of the stuffed sausage skein, respectively.

3. Apparatus according to at least one of claims 1 or 2, **characterized in that** at least one transport element pair (2a, 3a; 2b, 3b) is formed of several spaced-apart subtransport element pairs (2a', a", 3a', a", 2b', b", 3b' b") driven in the same manner.

4. Apparatus according to claim 3, **characterized in that** the subtransport elements (2a', a", 3a', a", 2b', b", 3b' b"), which are disposed side by side in a spaced-apart manner, are connected by a connecting element (8) of the transport element pairs on which the dividing element (4a, 5a; 4b, 5b) is arranged.

5. Apparatus according to at least one of claims 1 to 4, **characterized in that** the dividing elements (4a, 5a; 4b, 5b; 4c, 5c) are arranged to lie substantially above the central axis M of the adjacent transport elements.

6. Apparatus according to at least one of claims 1 to 5, **characterized in that** the dividing elements (4a, 5a; 4b, 5b; 4c, 5c) are disposed on the transport elements to be rotatably mounted about an axis perpendicularly to the transport direction T.

7. Apparatus according to at least one of claims 1 to 6, **characterized in that** a control device (10) is provided, which controls the independent drives of the transport element pairs (2a, 3a; 2b, 3b; 2c, 3c) such that the sausage skein portions separated by successive pairs of dividing elements (4a, 5a; 4b, 5b; 4c, 5c), which engage the sausage skein, have a predetermined length L.

8. Apparatus according to at least one of claims 1 to 7, **characterized in that** the rotating transport elements of the transport element pairs (2a, 3a; 2b, 3b; 2c, 3c) are disposed opposite largely in parallel to each other or approach each other under a specific angle (α) in the transport direction T.

9. Method for dividing a stuffed sausage skein with an apparatus according to at least one of claims 1 to 8, comprising the following steps:
a) transporting the stuffed sausage skein (14) in the transport direction T through the adjacently arranged rotating transport element pairs (2a, 3a; 2b, 3b; 2c, 3c),
b) dividing the stuffed sausage skein (14) at a first point S1 by a dividing element pair (4a, 5a; 4b, 5b; 4c, 5c) of one of the transport element pairs (2a, 3a; 2b, 3b; 2c, 3c), which engages the sausage skein,
c) transporting the stuffed sausage skein (14) further,
d) dividing the stuffed sausage skein at a second point S2 by a following dividing element pair (4a, 5a; 4b, 5b; 4c, 5c) of another transport element pair (2a, 3a; 2b, 3b; 2c, 3c), which engages the sausage skein,
wherein the speeds of the transport element pairs (2a, 3a; 2b, 3b; 2c, 3c) is adjusted such that the spacing between the first S1 and the second point S2 corresponds to a predetermined length I of the divided sausage skein (14).

10. Method according to claim 9, **characterized in that**, as the pair of dividing elements engages the sausage skein, the corresponding pair of transport elements is driven at a speed synchronous with respect to the discharge of the stuffing material and the conveying speed of the stuffed sausage skein, respectively.

11. Method according to claim 9 or 10, **characterized in that**, for producing the points of separation, in steps a) and d) two dividing element pairs (4a, 5a; 4b, 5b; 4c, 5c) are each engaged directly one after the other with the stuffed sausage skein to be separated.

12. Method according to claim 11, **characterized in that** the two dividing element pairs (4a, 5a; 4b, 5b; 4c, 5c) are disposed on different transport element pairs (2a, 3a; 2b, 3b; 2c, 3c), wherein the transport element pair including the second dividing element pair is driven more slowly than the first one.

## Revendications

1. Dispositif (1) destiné au partage d'un cordon de saucisses (14) rempli comprenant :
une paire d'éléments de transport (2, 3), qui comporte des éléments de transport tournant en vis-à-vis, entre lesquels est transporté le cordon de saucisses (14) rempli dans la direction de transport T, et qui comportent chacun au moins un élément de partage (4, 5), **caractérisé en ce que**
le dispositif comprend plusieurs paires d'éléments de transport (2a, 3a ; 2b, 3b ; 2c, 3c) juxtaposées, entraînables indépendamment les unes des autres, avec des paires d'éléments de partage (4a, 5a ; 4b, 5b ; 4c, 5c) correspondantes.

2. Dispositif suivant la revendication 1, **caractérisé en ce que** le dispositif (1) comporte en supplément une paire d'éléments de transport (2c, 3c) entraînable indépendamment, qui ne présente aucun élément de partage et est réalisée de telle sorte qu'elle guide et supporte le cordon de saucisses rempli, ainsi qu'un dispositif de commande (10), qui entraîne cette paire d'éléments de transport (2c, 3c) à une vitesse telle qu'elle tourne en synchronisme avec l'éjection du produit de remplissage ou avec la vitesse de transport du cordon de saucisses rempli.

3. Dispositif suivant l'une au moins des revendications 1 et 2, **caractérisé en ce qu'**au moins une paire d'éléments de transport (2a, 3a ; 2b, 3b) est formée de plusieurs paires d'éléments de sous-transport distantes (2a', a " , 3a', a" ; 2b', b" , 3b' ; b") , qui sont entraînées de façon égale.

4. Dispositif suivant la revendication 3, **caractérisé en ce que** les éléments de sous-transport (2a', a " , 3a' ; a", 2b', b" , 3b' ; b"), qui sont juxtaposés à distance les uns des autres, sont assemblés par l'intermédiaire d'un élément de jonction (8) des paires d'éléments de transport, sur lequel est disposé l'élément de partage (4a, 4b, 5a, 5b).

5. Dispositif suivant l'une au moins des revendications 1 à 4, **caractérisé en ce que** les éléments de partage (4a, 5a ; 4b, 5b ; 4c, 5c) sont agencés de telle sorte qu'ils se situent essentiellement au-dessus de l'axe médian M des éléments de transport juxtaposés.

6. Dispositif suivant l'une au moins des revendications 1 à 5, **caractérisé en ce que** les éléments de partage (4a, 5a ; 4b, 5b ; 4c, 5c) sont disposés sur les éléments de transport de telle sorte qu'ils sont montés tournants autour d'un axe perpendiculaire à la direction de transport T.

7. Dispositif suivant l'une au moins des revendications 1 à 6, **caractérisé en ce qu'**il est prévu un dispositif de commande (10), qui règle les entraînements indépendants des paires d'éléments de transport (2a, 3a ; 2b, 3b ; 2c ; 3c) de telle sorte que les sections de cordons de saucisses, divisées par les paires d'éléments de partage (4a, 5a ; 4b, 5b ; 4c, 5c) qui s'engagent les unes à la suite des autres dans le cordon de saucisses, présentent une longueur L prédéfinie.

8. Dispositif suivant l'une au moins des revendications 1 à 7, **caractérisé en ce que** les éléments de transport tournants des paires d'éléments de transports (2a, 3a ; 2b, 3b ; 2c, 3c) se situent largement de façon parallèle l'un par rapport à l'autre ou convergent mutuellement dans la direction de transport T sous un angle défini (α).

9. Procédé destiné au partage d'un cordon de saucisses rempli par un dispositif suivant l'une au moins des revendications 1 à 8, comprenant les étapes suivantes :
a) transport du cordon de saucisses (14) rempli dans la direction de transport T au travers des paires d'éléments de transport (2a, 3a ; 2b, 3b ; 2c, 3c) tournantes, disposées les unes à côté des autres,
b) partage du cordon de saucisses (14) rempli en un premier endroit S1 par une paire d'éléments de partage (4a, 5a ; 4b, 5b ; 4c, 5c), qui s'engage dans le cordon de saucisses, de l'une des paires d'éléments de transport (2a, 3a ; 2b, 3b ; 2c, 3c),
c) transport ultérieur du cordon de saucisses (14) rempli,
d) partage du cordon de saucisses rempli en un second endroit S2, par une paire d'éléments de partage (4a, 5a ; 4b, 5b ; 4c, 5c) suivante, qui s'engage dans le cordon de saucisses, d'une autre paire d'éléments de transport (2a, 3a ; 2b, 3b ; 2c, 3c),
les vitesses des paires d'éléments de transport (2a, 3a ; 2b, 3b ; 2c, 3c) étant réglées de telle sorte que la distance entre le premier endroit S1 et le second endroit S2 correspond à une longueur prédéfinie 1 du cordon de saucisses (14) partagé.

10. Procédé suivant la revendication 9, **caractérisé en ce que**, lors de l'engagement de la paire d'éléments de partage dans le cordon de saucisses, la paire d'éléments de transport correspondante est entraînée à une vitesse synchrone à l'éjection du produit de remplissage ou à la vitesse de transport du cordon de saucisses rempli.

11. Procédé suivant l'une des revendications 9 et 10, **caractérisé en ce que**, pour produire les endroits de partage dans les étapes a) et d), deux paires d'éléments de partage (4a, 5a ; 4b, 5b ; 4c, 5c) sont chacune amenées en prise directement l'une derrière l'autre dans le cordon de saucisses rempli à partager.

12. Procédé suivant la revendication 11, **caractérisé en ce que** les deux paires d'éléments de partage (4a, 5a ; 4b, 5b ; 4c, 5c) sont disposées sur des paires d'éléments de transport (2a, 3a ; 2b, 3b ; 2c, 3c) différentes, la paire d'éléments de transport, qui présente la seconde paire d'éléments de partage, étant entraînée plus lentement que la première.
